# EUROPÄISCHE PATENTSCHRIFT

(11) **EP 0 945 210 B1**
(45) Veröffentlichungstag und Bekanntmachung des Hinweises auf die Patenterteilung: **07.05.2003**
(21) Anmeldenummer: 99103481.0
(22) Anmeldetag: 23.02.1999
(51) Int. Cl.: B23K 31/02

(54) **Schweissverfahren zum Verbinden von Profilträgern, insbesondere von Lamellen für Fahrbahn-Übergangs-konstruktionen**
Girder welding method, in particular for lamellae used in roadway passage structures
Procédé de soudage de profilés, en particulier de lamelles utilisées pour des éléments de franchissement de chaussées

(30) Priorität: 24.03.1998 DE 19812933
(43) Veröffentlichungstag der Anmeldung: 29.09.1999
(73) Patentinhaber: Federal-Mogul Sollinger Hütte GmbH, 37170 Uslar (DE)
(72) Erfinder: Brase,Dietrich, 32469 Petershagen (DE); Schulze, Tobias, 37170 Uslar (DE); Braun, Joachim, 37170 Uslar (DE)
(74) Vertreter: Geyer, Werner, Dr.-Ing.

(56) Entgegenhaltungen:
- DE-A- 2 700 720
- US-A- 3 306 642
- "Neues in der Schweisstechnik 1995" SCHWEISSEN UND SCHNEIDEN,1996, XP000595380

## Beschreibung

Die Erfindung bezieht sich auf ein Schweißverfahren zum Verbinden von Profilträgern, insbesondere von Lamellen für Fahrbahn-Übergangskonstruktionen, wobei jeder Profilträger einen Mittelsteg aufweist, an dem sich oben und unten jeweils ein nach beiden Seiten überstehender Querflansch anschließt.

Bei Profilträgern, insbesondere Lamellen, an Fahrbahnübergängen handelt es sich um dynamisch hoch beanspruchte Bauteile, die auf Ermüdungsfestigkeit bemessen werden müssen. Wenn Schweißstöße an solchen Lamellen ausgeführt werden müssen, insbesondere bei erforderlichen Baustellenstößen, müssen diese, da ein Zugang meist nur von oben her möglich ist, von der Brückenoberseite her unter räumlich sehr engen Bedingungen herstellbar sein. Dabei wird gefordert, daß alle Profilquerschnitte der Lamellen voll angeschlossen werden, d.h. daß sie in einer bestimmten vorgegebenen Schweißgüte ausgeführt und vollkommen durchgeschweißt werden müssen. Laschen und Verstärkungen sollen dabei nicht im Bereich der Schweißstöße angeordnet werden, weil dies die Ermüdungsfestigkeit der Lamellen negativ beeinflussen würden.

Die Ermüdungsfestigkeit eines Schweißstoßes läßt sich nicht nur durch die Qualität der Schweißung, sondern auch ganz gravierend durch die geometrische Gestaltung beeinflussen. Die konstruktive Gestaltung eines Schweißstoßes entscheidet von vorneherein über einen günstigen oder ungünstigen Spannungsverlauf und über das Schrumpfverhalten im Schweißstoß.

Aus der DE-PS 39 28 398 ist ein Schweißverfahren bekannt, mit dem solche Lamellen von Fahrbahnübergängen nur von der Brückenoberseite stumpf verschweißt werden können. Dabei ist es allerdings erforderlich, daß die Lamellen vor dem Schweißbeginn mittels Hilfsvorrichtungen biegesteif miteinander verbunden und den Schweißschrumpfspannungen entgegengesetzt vorgespannt werden, und daß die Schweißbäder mittels schrittweise angebrachter Kupferbacken gesichert werden. Dies hat jedoch den Nachteil, daß aufgrund der großen eingesetzten Schweißbadbreite (Spaltenbreite) von 10 bis 12 mm zwischen den zu verschweißenden Lamellen sehr hohe Schrumpfspannungen entstehen, aus denen wiederum Verformungen in den Lamellen resultieren, denen mittels aufwendiger Hilfsvorrichtungen entsprechende Vorverformungen entgegengesetzt werden müssen. Bei diesem bekannten Verfahren müssen die Lamellen vor dem Schweißen vorverformt werden, da nach Abschluß des Schweißens ein Richten der Lamellen aus räumlichen und auch aus funktionellen Gründen nicht mehr möglich ist. Zudem muß das Schweißbad abschnittsweise mit relativ teuren, speziell den Konturen der Mittellamelle angepaßten Kupferplatten gesichert werden, die abschnittsweise auf manuellem Weg einzeln an den Lamellen auf die Schweißfuge montiert werden müssen.

Ausgehend hiervon liegt der Erfindung die Aufgabe zugrunde, ein Verfahren zur Herstellung eines Schweißstoßes an solchen Profilträgern, insbesondere Lamellen, für Fahrbahnübergänge zu entwickeln, bei dem alle Schweißnähte im Schweißstoß auch unter räumlich beengten Bedingungen nur von der Brückenoberseite sach- und fachgerecht herstellbar sind, mit Stabelektroden hergestellt werden können und eine Vorspannung der Lamellen entgegen den zu erwartenden Schrumpfungen nicht erforderlich ist.

Erfindungsgemäß wird dies durch ein Schweißverfahren zum Verbinden von Profilträgern, insbesondere von Lamellen für Fahrbahn-Übergangskonstruktionen, erreicht, bei dem jeder Profilträger einen Mittelsteg aufweist, an dem sich oben und unten jeweils ein nach beiden Seiten überstehender Querflansch anschließen, wobei die unteren Querflansche beider Profilträger im Bereich der Stoßstelle jeweils über den Mittelsteg und den oberen Querflansch um einen Abstand überstehen und die beiden einander zugewandten Enden der unteren Querflansche mit einer zueinander V-förmigen Schweißnahtvorbereitung versehen sind sowie von oben her stumpf verschweißt werden, wonach zwischen den einander zugewandten Enden der Mittelstege beider Profilträger ein den Abstand zwischen diesen Mittelstegen überbrückender Mittelstegabschnitt mit einer Höhe, die bis zur Oberkante der oberen Querflansche reicht, in Ausrichtung zu diesen Mittelstegen eingesetzt wird, der an seinen den Mittelstegen und den unteren Querflanschen zugewandten Endkanten jeweils mit einer K-förmigen Schweißnahtvorbereitung versehen ist und dort anschließend zu seinen beiden Seiten mit den Endkanten der Mittelstege und unten mit den Querflanschen von oben her verschweißt wird, und wobei anschließend zur Überbrückung des verbleibenden Zwischenraums zwischen den Enden der oberen Querflansche und zu deren durchgehender Verbindung beidseits des Mittelstegabschnitts zwei obere Flanschabschnitte so eingesetzt werden, daß ihre Oberflächen mit den Oberflächen der anliegenden oberen Querflansche in einer Ebene liegen, wobei diese oberen Flanschabschnitte an ihren Seitenflächen mit dem Mittelstegabschnitt und den oberen Querflanschen der beiden Profilträger jeweils mit einer V-förmigen Schweißnahtvorbereitung versehen sind und anschließend mit dem Mittelstegabschnitt und den Enden der oberen Querflansche beider Profilträger von oben her verschweißt werden.

Bei dem erfindungsgemäßen Schweißverfahren müssen die zu verschweißenden Lamellen nur in ihrer Flucht und Ebenheit fixiert werden, ein irgendwie geartetes Vorspannen in einer Richtung entgegen zu erwartenden Schrumpfungen ist nicht erforderlich. Auch müssen keine Kupferbacken o.ä. zur Sicherung des Schweißbades im Bereich der vertikalen Stegkonturen der Lamellen eingesetzt werden. Alle Schweißnähte lassen sich bei dem erfindungsgemäßen Schweißverfahren auch unter räumlich beengten Bedingungen unschwer nur von der Brückenoberseite her und mit Stabelektroden durchführen.

Bei dem erfindungsgemäßen Schweißverfahren sind auch alle Profilquerschnitte, an denen die Schweißungen durchgeführt werden müssen, voll angeschlossen, d.h. vollkommen durchgeschweißt. Im Bereich der Schweißstöße finden sich keine Laschen und/oder Verstärkungen, durch welche die Ermüdungsfestigkeit des Schweißstoßes ungünstig beeinflußt werden könnte.

Beim erfindungsgemäßen Schweißverfahren ist es ferner von Vorteil, wenn die unteren Querflansche beider Profilträger an der Stoßstelle jeweils gleich weit, bevorzugt über eine Länge von 100 mm bis 150 mm, über ihre Mittelstege und ihre oberen Querflansche überstehen. Bevorzugt weist der Mittelstegabschnitt dieselbe Wandstärke wie die Mittelstege beider Profilträger auf, wobei, erneut bevorzugt, die beiden oberen Flanschabschnitte dieselbe Wandstärke wie die oberen Querflansche beider Profilträger aufweisen.

Die Erfindung wird nachfolgend anhand der Zeichnung im Prinzip beispielshalber noch näher erläutert. Es zeigen:
Fig. 1 das erfindungsgemäße Schweißverfahren zum Verschweißen zweier Profilträger nach dem ersten Schweißschritt;
Fig. 2 das erfindungsgemäße Schweißverfahren in einem auf die Darstellung der Fig. 1 folgenden Schritt, nämlich nach dem folgenden Einsetzen eines Mittelstegabschnitts und dessen Verschweißen an den Mittelstegen der beiden Profilträger,
Fig. 3 den abschließenden Schritt bei einem erfindungsgemäßen Schweißverfahren zum Einbringen und anschließenden Verschweißen zweier oberer Flanschabschnitte, und
Fig. 4 die Einzelheit IV-IV aus Fig. 2 in vergrößerter Detailschnittdarstellung.

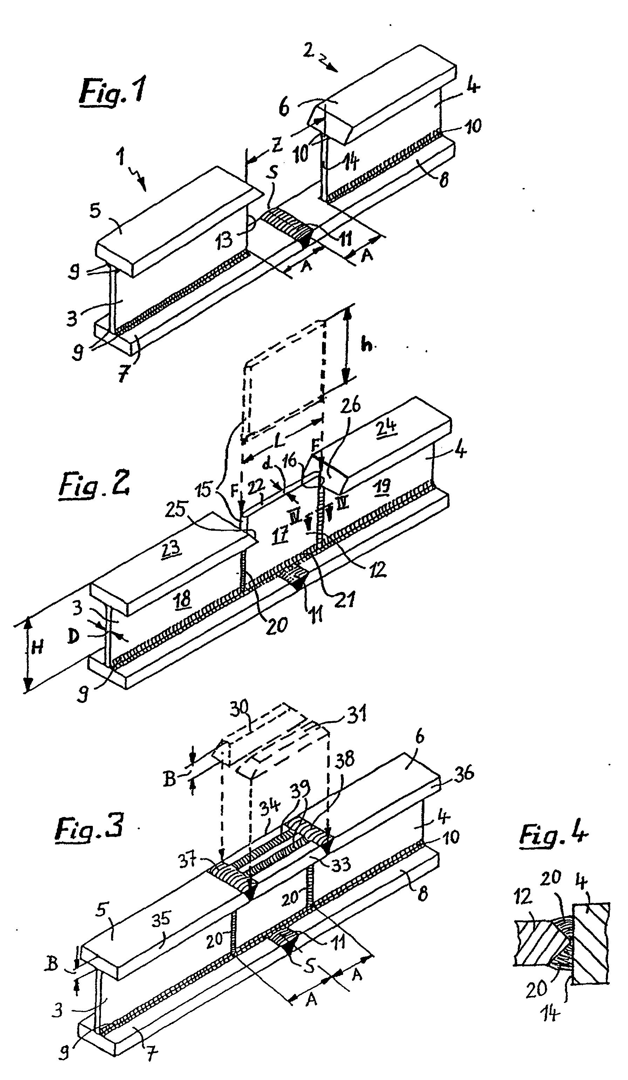

In Fig. 1 sind zwei Profilträger 1 und 2 (hier als Lamellen für einen Fahrbahnübergang) gezeigt, deren jeder einen Mittelsteg 3 bzw. 4 aufweist, an den oben und unten jeweils ein Quersteg in Form eines Querflansches 5 bzw. 6 und 7 bzw. 8 angebracht ist. Wie aus Fig. 1 ersichtlich, sind die Querflansche 5 und 7 bzw. 6 und 8 am zugeordneten Mittelsteg 3 bzw. 4 über Schweißnähte 9 bzw. 10 befestigt.

Bei jedem Profilträger 1 bzw. 2 steht der untere Querflansch 7 bzw. 8 um eine Strecke ***A*** über, wie dies aus Fig. 1 deutlich entnommen werden kann: die miteinander zu verschweißenden Profilträger 1 und 2 bilden die Stoßstelle ***S*** durch ihre beiden vorragenden unteren Querflansche 7 und 8, die mit ihren einander zugewandten Seiten zur Ausbildung der Stoßstelle S aneinander gelegt werden. Bei jedem Profilträger 1, 2 endet jedoch der Mittelsteg 3 bzw. 4 und der an diesem oben angebrachte Quersteg 5 bzw. 6 um den Abstand ***A*** vor Erreichen der Stoßstelle ***S*** , wobei jeweils der Mittelsteg 3 bzw. 4 und der obere Querflansch 5 bzw. 6 an derselben Stelle enden, Ober die dann der untere Querflansch 7 bzw. 8 vorragt.

Die beiden einander zugewandten Enden der unteren Querflansche 7 und 8 sind an der Stoßstelle ***S*** mit einer V-förmigen Schweißnahtvorbereitung versehen, d.h. die beiden Endkanten der Querflansche 7 und 8 verlaufen, wie dies Fig. 1 zeigt, jeweils in einer Abschrägung von oben nach unten, woraus sich, wenn die beiden Endkanten der Querflansche 7 und 8 an der Stoßstelle ***S*** aneinandergelegt werden, sie dort, von oben gesehen, eine im Querschnitt V-förmig von oben nach unten zulaufende Formgebung ausbilden, in der dann in einem anschließenden Schweißvorgang von oben her eine Stumpfverschweißung durch Einbringen einer Schweißnaht 11 in die V-förmige Schweißnahtvorbereitung an den Endkanten der beiden Querflansche 7 und 8 erfolgt.

Damit ist nach diesem ersten Schritt des Schweißvorgangs der Zustand erreicht, wie er in Fig. 1 dargestellt ist.

In einem nächsten Schritt wird nun der freie Raum Z, der zwischen den beiden Mittelstegen 3 und 4 der Profilträger 1 und 2 durch das Überstehen der beiden unteren Querflansche 7 und 8 entstanden ist, durch einen Mittelstegabschnitt 12 überbrückt, dessen Länge ***L*** genau dem Abstand zwischen den Enden 13 und 14 der beiden Profilträger 1 und 2 entspricht.

Der Mittelstegabschnitt 12 weist dabei eine Wandstärke ***d*** auf, die der Wandstärke ***D*** der Mittelstege 3 bzw. 4 der beiden Profilträger 1 und 2 entspricht.

An den den beiden Endseiten 13 und 14 zugewandten Endseiten 15 und 16 des Mittelstegabschnitts 12 ist dieser ebenso wie an seiner unten den Querflanschen 7 und 8 zugewandten Bodenseite jeweils mit einer ***K***-förmigen Schweißnahtvorbereitung versehen, wie diese aus der zeichnerischen Darstellung der Fig. 2 ersichtlich ist, auf die insoweit ausdrücklich verwiesen wird. In Fig. 2 ist auch der Mittelstegabschnitt 12 zunächst in einer oberen, gestrichelt eingezeichneten Stellung, dargestellt, von der aus er nach unten (in Richtung der Pfeile F) in den Zwischenraum Z zwischen den Endkanten 13 und 14 der Profilträger 1 und 2 eingeschoben wird und zwar derart, daß seine Seitenflächen 17 im dort eingesetzten Zustand mit den Seitenflächen 18 und 19 der Mittelstege 3 und 4 der Profilträger 1 und 2 in einer Ebene liegen (in Fig. 2 sind nur die Seitenflächen 17, 18 und 19 auf einer Seite der Anordnung dargestellt).

Die ***K***-förmige Schweißnahtvorbereitung an den Endkanten 15 und 16 des Mittelstegabschnitts 12 und an dessen Bodenfläche wird dadurch erhalten, daß diese Endkanten, jeweils in Draufsicht, V-förmig zum Ende des Mittelstegabschnitts 12 auf der betreffenden Seite zulaufen, während die Endkanten 13 und 14 der Mittelstege 3 und 4 der beiden Profilträger 1 und 2 jeweils eben enden. Durch die Anlage der Endkante des jeweils V-förmigen Endbereiches des Mittelstegabschnitts 12 gegen die Endfläche 13 bzw. 14 der Mittelstege 3 und 4 bzw. gegen die ebene Oberfläche der Querflansche 7 und 8 ergibt sich, wie dies in der vergrößerten Detailschnittdarstellung der Fig. 4 (Schnitt IV-IV aus Fig. 2) ersichtlich ist, eine im Querschnitt K-förmige Nutgestaltung zur Aufnahme der anschließend einzubringenden Schweißnähte 20, die beidseits des Mittelstegabschnitts 12 von oben her angebracht werden können. Dasselbe gilt in gleicher Weise auch für die gegenüberliegende Endfläche 15 des Mittelstegabschnitts 12.

Nachdem diese Verschweißungen angebracht wurden, wird der Zwischenstegabschnitt 12 auch unten in Fortsetzung der Schweißnähte 9 bzw. 10 an den Profilträgern 1 und 2 beidseits jeweils mit einer Schweißnaht 21 gegenüber den Querflanschen 7 und 8 (über die Schweißnaht 11 an der Stoßstelle ***S*** hinüber) verschweißt.

Der Mittelstegabschnitt 12 wird mit einer Höhe ***h*** ausgeführt, die der Höhe der Mittelstege 3 bzw. 4 und zusätzlich der Plattendicke der oberen Querflansche 5 und 6, somit insgesamt der in Fig. 2 mit ***H*** angegebenen Länge, entspricht, so daß die obenliegende Endkante 22 des Mittelstegabschnitts 12 in derselben Ebene wie die Oberflächen 23 und 24 der oberen Querflansche 5 und 6 liegt.

Wie aus Fig. 2 entnommen werden kann, sind die einander zugewandten Endflächen 25 und 26 der oberen Querstege 3 und 4 ebenfalls mit einer in Richtung auf den jeweils anderen Querflansch hin von oben nach unten abfallenden Schräge versehen, wie dies aus der Figurendarstellung der Fig. 2 deutlich entnommen werden kann. Im Bereich dieser Schrägen liegen die Endkanten 15 und 16 des Mittelstegabschnitts 12 nicht mehr an den Endflächen 25 und 26 der oberen Querflansche 5 und 6 an, sondern ragen dort ohne Anlage an diese Gegenflächen bis zum oberen Ende des Mittelstegabschnitts 12.

In einem nächsten Schritt des Schweißverfahrens, der in Fig. 3 dargestellt ist, werden nun zu beiden Seiten des Mittelstegabschnitts 12 zwei Flanschabschnitte 30 und 31 angebracht, und zwar von oben her, wie dies in Fig. 3 in gestrichelter Weise dargestellt ist.

Diese beiden Flanschabschnitte 30 und 31 weisen dieselbe Dicke ***B*** wie die oberen Querflansche 5 und 6 der Profilträger 1 und 2 auf und sind mit ihrer Form so ausgeführt, daß sie auf ihren jeweils seitlich außen liegenden Begrenzungsflächen 33 und 34 mit den dort vorliegenden seitlichen Begrenzungsflächen 35 und 36 der oberen Querflansche 5 und 6 ausgerichtet sind.

Die anderen Endflächen der Flanschabschnitte 33 und 34, nämlich die den oberen Querflanschen 5 und 6 zugewandten Endflächen und die den in der Mitte liegenden Mittelstegabschnitt 12 zugewandten Endflächen, sind wieder so abgeschrägt, daß sie jeweils eine V-förmige Schweißnahtvorbereitung ergeben derart, daß in einem anschließenden Schweißvorgang von oben her die Flanschabschnitte 33, 34 sowohl in Querrichtung durch die Schweißnähte 37 und 38 an den oberen Querflanschen 5 und 6, wie auch über die in Längsrichtung verlaufenden Schweißnähte 39 am Mittelstegabschnitt 12 verschweißt werden können.

Das Endprodukte des beschriebenen Schweißverfahrens ist aus Fig. 3 ersichtlich. An allen Schweißnähten 10, 20, 21, 37, 38 und 39 ist eine vollständige Durchschweißung der Querschnitte gegeben.

Alle Verfahrensschritte des Einsetzens und Verschweißens können aufgrund der gewählten Schweißnahtvorbereitungen und der Lage der einzelnen Teile relativ zueinander sowie der Abfolge der gezeigten Verfahrensschritte bei jedem Verfahrensschritt rein von oben her ausgeführt werden, was gerade beim Schweißen von Fahrbahnlamellen oder von Profilträgern für Fahrbahnübergänge von besonders großer Wichtigkeit ist, da vielfach eine Zugänglichkeit ausschließlich von oben gegeben ist

Im praktischen Einsatzfall hat es sich als vorteilhaft erwiesen, wenn die Überstände ***A*** , um welche die unteren Querflansche 7 und 8 über die Mittelstege 3, 4 und die oberen Querflansche 5, 6 überstehen, gleich groß sind und eine Länge aufweisen, die im Bereich von 100 mm bis 150 mm liegt.

## Patentansprüche

1. Schweißverfahren zum Verbinden von Profilträgern (1,2), insbesondere von Lamellen für Fahrbahn-Übergangskonstruktionen, wobei jeder Profilträger (1,2) einen Mittelsteg (3,4) aufweist, an den sich oben und unten jeweils ein nach beiden Seiten überstehender Querflansch (5,6;7,8) anschließt, die unteren Querflansche (7,8) beider Profilträger (1,2) im Bereich der Stoßstelle (S) jeweils über den Mittelsteg (3,4) und den oberen Querflansch (5,6) um einen Abstand (A) überstehen und die beiden einander zugewandten Enden der unteren Querflansche (7,8) mit einer zueinander V-förmigen Schweißnahtvorbereitung versehen sind sowie von oben her stumpf verschweißt werden, wonach zwischen den einander zugewandten Enden (13,14) der Mittelstege (3,4) beider Profilträger (1,2) ein den Abstand (Z) zwischen diesen Mittelstegen (3,4) überbrückender Mittelstegabschnitt (12) mit einer Höhe (h), die bis zur Oberkante der oberen Querflansche (5,6) reicht, in Ausrichtung zu diesen eingesetzt wird, der an seinen den Mittelstegen (3,4) der Profilträger (1,2) und den unteren Querflanschen (7,8) zugewandten Endkanten (15,16) jeweils mit einer K-förmigen Schweißnahtvorbereitung versehen ist und dort anschließend zu seinen beiden Seiten mit den Endkanten (13,14) der Mittelstege (3,4) und unten mit den Querflanschen (7,8) von oben her verschweißt wird, und wobei anschließend zur Überbrückung des verbleibenden Zwischenraums zwischen den Enden (25,26) der oberen Querflansche (5,6) und zu deren durchgehender Verbindung beidseits des Mittelstegabschnitts (12) zwei obere Flanschabschnitte (30,31) so eingesetzt werden, daß ihre Oberflächen mit den Oberflächen der anliegenden oberen Querflansche (3,4) in einer Ebene liegen, wobei diese Flanschabschnitte (30,31) an ihren Seitenflächen mit dem Mittelstegabschnitt (12) und den oberen Querflanschen (5,6) der beiden Profilträger (1,2) jeweils mit einer V-förmigen Schweißnahtvorbereitung versehen sind und anschließend mit dem Mittelstegabschnitt (12) und den Enden (25,26) der oberen Querflansche (5,6) beider Profilträger (1,2) von oben her verschweißt werden.

2. Schweißverfahren nach Anspruch 1, **dadurch gekennzeichnet, daß** die unteren Querflansche (7,8) beider Profilträger (1,2) an der Stoßstelle (S) jeweils gleich weit, bevorzugt 100 mm bis 150 mm, über ihre Mittelstege (3,4) und ihre oberen Querflansche (5,6) überstehen.

3. Schweißverfahren nach Anspruch 1 oder 2, **dadurch gekennzeichnet, daß** der Mittelstegabschnitt (12) dieselbe Wandstärke (d) wie die Mittelstege (3,4) beider Profilträger (1,2) aufweist.

4. Schweißverfahren nach einem der Ansprüche 1 bis 3, **dadurch gekennzeichnet, daß** die beiden oberen Flanschabschnitte (30,31) dieselbe Wandstärke (B) wie die oberen Querflansche (5,6) beider Profilträger (1,2) aufweisen.

## Claims

1. A welding method for joining beams (1, 2), in particular lamellae for expansion joint constructions, each of said beams (1, 2) comprising a central web (3, 4), to the top and bottom of which is joined a respective transverse flange (5, 6, 7, 8), protruding on both sides, the lower transverse flanges (7, 8) of both beams (1, 2) each protruding beyond the central web (3, 4) and beyond the upper transverse flange (5, 6) by a distance (A) in the region of the joint location (S), and the two ends of the lower transverse flanges (7, 8) facing each other being provided with a preparatory V-shaped design for a subsequent welding operation as well as being butt-welded from above, after which there is inserted, between the ends (13, 14) of the central webs (3, 4) of both beams (1, 2), said ends (13, 14) facing each other, a central web portion (12) bridging the distance (Z) between said central webs (3, 4), which central web portion (12) has a height (h) reaching to the top edge of the upper transverse flanges (5, 6) and is inserted in alignment with the latter, said central web portion (12) being provided, at each of its terminal edges (15, 16) facing the central webs (3, 4) of the beams (1, 2) and the lower transverse flanges (7, 8), with a preparatory K-shaped preparatory welding seam, where the central web portion (12) is then welded, from above, on both sides, to the terminal edges (13, 14) of the central webs (3, 4) and, at the bottom, to the transverse flanges (7, 8) and wherein two upper flange portions (30, 31) for bridging the remaining gap between the ends (25, 26) of the upper transverse flanges (5, 6) and for forming a continuous connection between the latter are inserted on both sides of the central web portion (12) such that their surfaces lie in one plane with the surfaces of the abutting upper transverse flanges (3, 4), each of said flange portions (30, 31) being provided, at their lateral surfaces comprising the central web portion (12) and the upper transverse flanges (5, 6) of the two beams (1, 2), with a preparatory V-shaped design for a subsequent welding operation and subsequently being welded, from above, to the cental web portion (12) and to the ends (25, 26) of the upper transverse flanges (5, 6) of both beams (1, 2).

2. The welding method as claimed in Claim 1, **characterized in that** the lower transverse flanges (7, 8) of both beams (1, 2) each protrude to the same extent, preferably 100 mm to 150 mm, beyond their central webs (3, 4) and their upper transverse flanges (5, 6) at the joint location (S).

3. The welding method as claimed in Claim 1 or 2, **characterized in that** the central web portion (12) has the same wall thickness (d) as the central webs (3, 4) of both beams (1, 2).

4. The welding method as claimed in any one of Claims 1 to 3, **characterized in that** both upper flange portions (30, 31) have the same wall thickness (B) as the upper transverse flanges (5, 6) of both beams (1, 2).

## Revendications

1. Procédé de soudage pour l'assemblage de profilés (1, 2), en particulier de poutrelles utilisées pour des éléments de franchissement de chaussées, dans lequel chaque profilé (1, 2) présente une âme centrale (3, 4), à laquelle se raccorde respectivement au-dessus et en dessous une aile (5, 6 ; 7, 8) débordant de part et d'autre, les ailes inférieures (7, 8) des deux profilés (1, 2) dépassent chaque fois l'âme centrale (3, 4) et l'aile supérieure (5, 6) d'une distance (A) dans la région du joint bout à bout (S) et les deux extrémités tournées l'une vers l'autre des ailes inférieures (7, 8) sont soumises à une préparation des bords formant un V entre elles et sont soudées bout à bout par le haut, après quoi on introduit, entre les extrémités (13, 14) tournées l'une vers l'autre des âmes centrales (3, 4) des deux profilés (1, 2), en alignement avec ces âmes centrales, une portion d'âme centrale (12) comblant la distance (Z) entre ces âmes centrales (3, 4) et ayant une hauteur (h) qui atteint l'arête supérieure des ailes supérieures (5, 6), portion d'âme centrale qui est soumise à une préparation des bords formant un K sur ses bords d'extrémité (15, 16) tournés vers les âmes centrales (3, 4) des deux profilés (1, 2) et vers les ailes inférieures (7, 8) et qui y est ensuite soudée par le haut sur ses deux côtés aux bords d'extrémité (13, 14) des âmes centrales (3, 4) et dans le bas aux ailes (7, 8), et dans lequel ensuite, pour combler l'espace intermédiaire restant entre les extrémités (25, 26) des ailes supérieures (5, 6) et pour leur assemblage ininterrompu, deux portions d'ailes supérieures (30, 31) sont placées de part et d'autre de la portion d'âme centrale (12), de telle sorte que leurs faces supérieures se trouvent dans un plan des faces supérieures des ailes supérieures adjacentes (5, 6), ces portions d'ailes (30, 31) étant soumises à une préparation des bords sur leurs faces latérales formant chaque fois un V avec la portion d'âme centrale (12) et avec les ailes supérieures (5, 6) des deux profilés (1, 2), et étant ensuite soudées par le haut à la portion d'âme centrale (12) et aux extrémités (25, 26) des ailes supérieures (5, 6) des deux profilés (1, 2).

2. Procédé de soudage selon la revendication 1, **caractérisé en ce qu'**au joint soudé (S), les ailes inférieures (7, 8) des deux profilés (1, 2) dépassent de la même longueur, de préférence de 100 mm à 150 mm, au-delà de leurs âmes centrales (3, 4) et de leurs ailes supérieures (5, 6) respectives.

3. Procédé de soudage selon la revendication 1 ou 2, **caractérisé en ce que** la portion d'âme centrale (12) présente la même épaisseur (d) que les âmes centrales (3, 4) des deux profilés (1, 2).

4. Procédé de soudage selon l'une quelconque des revendications 1 à 3, **caractérisé en ce que** les deux portions d'ailes supérieures (30, 31) présentent la même épaisseur (B) que les ailes supérieures (5, 6) des deux profilés (1, 2).
